# FASCICULE DE BREVET EUROPEEN

(11) **EP 3 204 240 B1**
(45) Date de publication et mention de la délivrance du brevet: **04.07.2018**
(21) Numéro de dépôt: 15763935.2
(22) Date de dépôt: 18.09.2015
(51) Int. Cl.: B60C 9/20, B60C 9/28, B60C 11/00

(54) **PNEUMATIQUE POUR AVION**
FLUGZEUGREIFEN
AIRCRAFT TYRE

(30) Priorité: 08.10.2014 FR 1459638
(43) Date de publication de la demande: 16.08.2017
(73) Titulaire: Compagnie Générale des Etablissements Michelin, 63000 Clermont-Ferrand (FR)
(72) Inventeur: JOULIN, Emmanuel, F-63040 Clermont-Ferrand Cedex 9 (FR)
(74) Mandataire: Millanvois, Patrick Jacques Jean
(86) Numéro de dépôt international: PCT/EP2015/071396
(87) Numéro de publication internationale: WO 2016/055251

(56) Documents cités:
- EP-A1- 1 714 801
- EP-A1- 2 156 967
- EP-A1- 2 722 198
- EP-A2- 1 800 905
- US-A1- 2013 139 942

## Description

La présente invention concerne un pneumatique pour avion, et, en particulier, le sommet d'un pneumatique pour avion.

Un pneumatique comprend un sommet comprenant une bande roulement destinée à venir en contact avec le sol par l'intermédiaire d'une surface de roulement, deux bourrelets destinés à venir en contact avec une jante et deux flancs reliant le sommet aux bourrelets. Un pneumatique radial, tel que généralement utilisé pour un avion, comprend plus particulièrement une armature de carcasse radiale et une armature de sommet, telles que décrites, par exemple, dans le document EP 1 381 525.

Un pneumatique ayant une géométrie de révolution par rapport à un axe de rotation, la géométrie du pneumatique est généralement décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien.

Dans ce qui suit, les expressions « radialement intérieur à» et « radialement extérieur à» signifient respectivement « plus proche de l'axe de rotation du pneumatique, selon la direction radiale, que » et « plus éloigné de l'axe de rotation du pneumatique, selon la direction radiale, que ». Les expressions « axialement intérieur à» et « axialement extérieur à» signifient respectivement « plus proche du plan équatorial, selon la direction axiale, que » et « plus éloigné du plan équatorial, selon la direction axiale, que ». Une « distance radiale » est une distance par rapport à l'axe de rotation du pneumatique, et une « distance axiale » est une distance par rapport au plan équatorial du pneumatique. Une « épaisseur radiale » est mesurée selon la direction radiale, et une « largeur axiale » est mesurée selon la direction axiale.

L'armature de carcasse radiale est la structure de renforcement du pneumatique reliant les deux bourrelets du pneumatique. L'armature de carcasse radiale d'un pneumatique pour avion comprend généralement au moins une couche d'armature de carcasse, dite couche de carcasse. Chaque couche de carcasse est constituée d'éléments de renforcement enrobés dans un matériau polymérique, parallèles entre eux et faisant, avec la direction circonférentielle, un angle compris entre 80° et 100°. Chaque couche de carcasse est unitaire, c'est-à-dire qu'elle ne comprend qu'un seul élément de renforcement dans son épaisseur.

L'armature de sommet est la structure de renforcement du pneumatique radialement intérieure à la bande de roulement et le plus souvent radialement extérieure à l'armature de carcasse radiale. L'armature de sommet d'un pneumatique pour avion comprend généralement au moins une couche d'armature de sommet, dite couche de sommet. Chaque couche de sommet est constituée d'éléments de renforcement enrobés dans un matériau polymérique, parallèles entre eux et faisant, avec la direction circonférentielle, un angle compris entre +20° et -20°. Chaque couche de sommet est unitaire, c'est-à-dire qu'elle ne comprend qu'un seul élément de renforcement dans son épaisseur.

Parmi les couches de sommet, on distingue les couches de travail composant l'armature de travail, constituées le plus souvent d'éléments de renforcement textiles, et les couches de protection composant l'armature de protection, constituées d'éléments de renforcement métalliques ou textiles, et disposées radialement à l'extérieur de l'armature de travail. Les couches de travail conditionnent le comportement mécanique du sommet. Les couches de protection protègent essentiellement les couches de travail des agressions susceptibles de se propager à travers la bande de roulement radialement vers l'intérieur du pneumatique. Une couche de sommet, en particulier une couche de travail, est souvent une couche axialement large, c'est-à-dire qu'elle a une largeur axiale, par exemple, au moins égale au deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale telle que recommandée, par exemple, par la Tire and Rim Association ou TRA.

Le pneumatique peut également comprendre une armature de frettage, radialement intérieure ou radialement extérieure à l'armature de sommet, voire intercalée entre deux couches de sommet. L'armature de frettage d'un pneumatique pour avion comprend généralement au moins une couche d'armature de frettage, dite couche de frettage. Chaque couche de frettage est constituée d'éléments de renforcement enrobés dans un matériau polymérique, parallèles entre eux et faisant, avec la direction circonférentielle, un angle compris entre +10° et -10°. Une couche de frettage est le plus souvent une couche de travail axialement étroite, c'est-à-dire qu'elle a une largeur axiale sensiblement inférieure à la largeur axiale d'une couche de sommet et, par exemple, au plus égale à 80% de la largeur axiale maximale du pneumatique. Par largeur axiale d'une couche de renforts, on entend la distance axiale entre les éléments de renforcement les plus axialement extérieurs de la dite couche, que la distance entre chaque élément de renforcement soit constante ou non dans la direction axiale.

Les éléments de renforcement des couches de carcasse, de travail et de frettage, pour les pneumatiques pour avion, sont le plus souvent des câbles constitués de filés de filaments textiles, préférentiellement en polyamides aliphatiques ou en polyamides aromatiques. Les éléments de renforcement des couches de protection peuvent être soit des câbles constitués de fils métalliques, soit des câbles constitués de filés de filaments textiles.

Concernant les éléments de renforcement textiles, les propriétés mécaniques en extension (module, allongement et force à la rupture, ténacité) des éléments de renforcement textiles sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 +/- 2°C ; hygrométrie de 65 +/- 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont des moyennes de 10 mesures.

Les pneumatiques pour avion présentent souvent une usure non uniforme de la bande de roulement, appelée usure irrégulière, résultant des sollicitations au cours des différentes phases de vie du pneumatique : décollage, roulage et atterrissage. Il a été plus particulièrement mis en évidence une usure différentielle de la bande roulement entre une partie médiane et les deux parties latérales de la bande de roulement, axialement extérieures à la partie médiane. Usuellement, il est souhaité que l'usure de la partie médiane soit plus importante et pilote la durée de vie du pneumatique. Dans certains cas, l'usure différentielle susmentionnée exacerbe l'usure des parties latérales de la bande de roulement, qui devient dominante par rapport à l'usure de la partie médiane, ce qui entraîne un retrait prématuré du pneumatique économiquement préjudiciable.

Il est connu de l'homme du métier que l'usure de la bande de roulement d'un pneumatique dépend de plusieurs facteurs liés à l'usage et à la conception du pneumatique. L'usure dépend en particulier de la forme géométrique de la surface de contact de la bande de roulement du pneumatique avec le sol et de la répartition des contraintes mécaniques dans cette surface de contact. Ces deux paramètres sont fonction du profil méridien gonflé de la surface de roulement. Le profil méridien gonflé de la surface de roulement est la coupe de la surface de roulement, par un plan méridien, pour un pneumatique gonflé à sa pression nominale et non chargé.

Pour augmenter la durée de vie du pneumatique, vis-à-vis de l'usure différentielle de la partie médiane de la bande de roulement, l'homme du métier a cherché à optimiser la forme géométrique du profil méridien gonflé de la surface de roulement.

Le document EP 1 163 120 présente une armature de sommet d'un pneumatique pour avion, dont on cherche à limiter les déformations radiales lors du gonflage du pneumatique à sa pression nominale. Ceci permet de limiter les déformations radiales du profil méridien gonflé de la surface de roulement. La limitation des déformations radiales de l'armature de sommet, lors du gonflage du pneumatique à sa pression nominale, est obtenue par une augmentation des rigidités d'extension circonférentielles des couches de sommet, obtenue par le remplacement des éléments de renforcement des couches de sommet, usuellement en polyamides aliphatiques par des éléments de renforcement en polyamides aromatiques. Les modules d'élasticité des éléments de renforcement en polyamides aromatiques étant supérieurs à ceux des éléments de renforcement en polyamides aliphatiques, les allongements des premiers, pour une sollicitation en extension donnée, sont plus faibles que ceux des seconds.

Le document EP 1 381 525 précédemment cité propose une voie d'action sur la forme géométrique du profil méridien gonflé de la surface de roulement en faisant évoluer les rigidités d'extension des couches de sommet et/ou de carcasse. Ce document propose l'utilisation d'éléments de renforcement hybrides, c'est-à-dire constitués à la fois de polyamides aliphatiques et de polyamides aromatiques, à la place des usuels éléments de renforcement en polyamides aliphatiques. Ces éléments de renforcement hybrides ont des modules d'élasticité supérieurs à ceux des éléments de renforcement en polyamides aliphatiques, donc ont des allongements plus faibles, pour une sollicitation en extension donnée. Les éléments de renforcement hybrides sont utilisés dans les couches de sommet, pour augmenter les rigidités d'extension circonférentielles, et/ou dans les couches de carcasse, pour augmenter les rigidités d'extension dans le plan méridien.

Le document EP 1 477 333 propose une autre voie d'action sur la forme géométrique du profil méridien gonflé de la surface de roulement en faisant évoluer axialement la rigidité d'extension circonférentielle globale de l'armature de sommet, de telle sorte que le rapport entre les rigidités d'extension circonférentielles globales des parties axialement les plus extérieures de l'armature de sommet et de la partie médiane de l'armature de sommet soit compris dans un intervalle défini. La rigidité d'extension circonférentielle globale de l'armature de sommet résulte de la combinaison des rigidités d'extension circonférentielles des couches de sommet. La rigidité d'extension circonférentielle globale de l'armature de sommet varie dans la direction axiale, en fonction de l'évolution du nombre de couches de sommet superposées. La solution proposée est basée sur une répartition axiale des rigidités d'extension circonférentielles globales entre la partie médiane et les parties axialement les plus extérieures de l'armature de sommet, dites les épaules, la partie médiane étant plus rigide que les parties axialement les plus extérieures de l'armature de sommet. Les éléments de renforcement utilisés dans les couches de sommet ou de carcasse sont en polyamides aliphatiques, en polyamides aromatiques ou hybrides.

Le document WO 2010000747 décrit un pneumatique pour avion, dont la pression nominale est supérieure à 9 bars et la flèche sous charge nominale supérieure à 30%, comprenant une bande de roulement ayant une surface de roulement, une armature de sommet, comprenant au moins une couche de sommet, une armature de carcasse comprenant au moins une couche de carcasse, lesdites surface de roulement, armature de sommet et armature de carcasse étant respectivement définies géométriquement par des profils méridiens initiaux. Selon l'invention, le profil méridien initial de l'armature de sommet est localement concave sur une partie médiane de largeur axiale au moins égale à 0,25 fois la largeur axiale de l'armature de sommet. La solution technique décrite par le document WO 2010000747 permet d'augmenter la durée de vie sur usure d'un pneumatique pour avion, par une limitation de l'usure différentielle de la bande de roulement, entre une partie médiane et les parties latérales axialement extérieures à cette partie médiane.

D'autres pneumatiques connus sont divulgués dans les documents EP-A-2156967, US-A-20130139942 et EP-A-1800905.

Les inventeurs se sont donné pour objectif d'améliorer l'usure d'un pneumatique pour avion destiné à porter de lourdes charges et gonflé à des pressions supérieures à 15 bars.

Cet objectif a été atteint par un pneumatique pour avion tel que défini dans la revendication 1. Ledit pneumatique comprends:
- une bande de roulement, ayant une épaisseur au centre, mesurée dans le plan équatorial, passant par le milieu de la bande de roulement et perpendiculaire à l'axe de rotation du pneumatique, entre le point le plus radialement extérieur de la bande de roulement et le point le plus radialement extérieur d'une armature de sommet radialement intérieure à la bande de roulement,
- l'armature de sommet, comprenant au moins une armature de travail
- l'armature de travail comprenant au moins une couche de travail, ayant une largeur axiale LT, mesurée sur la couche de travail ayant la plus grande largeur axiale, au moins égale aux 2/3 de la largeur axiale maximale du pneumatique, et ayant une épaisseur au centre dans le plan équatorial, mesurée entre le point le plus radialement extérieur de la couche de travail la plus radialement extérieure et le point le plus radialement intérieur de la couche de travail la plus radialement intérieure,
- les couches de travail comprenant des éléments de renforcement textile,
- une armature de carcasse, radialement intérieure à l'armature de travail, comprenant au moins une couche de carcasse et ayant une épaisseur au centre dans le plan équatorial, mesurée entre le point le plus radialement extérieur de la couche de carcasse la plus radialement extérieure et le point le plus radialement intérieur de la couche de carcasse la plus radialement intérieure,
- les couches de carcasse comprenant des éléments de renforcement textile,
- une armature de renforcement constituée par l'armature de travail et l'armature de carcasse ayant une épaisseur au centre dans le plan équatorial, mesurée entre le point le plus radialement extérieur de la couche de travail la plus radialement extérieure et le point le plus radialement intérieur de la couche de carcasse la plus radialement intérieure,
- l'épaisseur au centre de la bande roulement est au moins égale à 1,1 fois l'épaisseur au centre de l'armature de renforcement constituée par l'armature de travail et l'armature de carcasse,
- l'épaisseur au centre de la bande roulement est au moins égale à 1,5 fois l'épaisseur au centre de l'armature de travail,
- les éléments de renforcement des couches de travail ont une ténacité au moins égale à 90 cN/tex.

L'armature de travail d'un pneumatique est généralement constituée d'une pluralité de couches de travail radialement superposées et ayant, dans un plan méridien du pneumatique, des largeurs axiales généralement différentes d'une couche à l'autre, afin d'étager les extrémités axiales desdites couches de travail. L'armature de travail comprend généralement au moins une couche de travail dite large, c'est-à-dire que sa largeur axiale est au moins égale aux deux tiers de la largeur axiale maximale du pneumatique. La largeur axiale maximale du pneumatique est mesurée au niveau des flancs, le pneumatique étant monté sur sa jante et faiblement gonflé, c'est-à-dire gonflé à une pression égale à 10% de la pression nominale recommandée. Le plus souvent, mais pas exclusivement, la couche de travail radialement intérieure, c'est-à-dire la plus radialement intérieure, est la couche de travail la plus large. Par extension, cette largeur de la couche de travail la plus large est nommée largeur de l'armature de travail.

La largeur axiale d'une couche de travail est la distance axiale entre les points d'extrémités de la dite couche de travail. Elle est usuellement mesurée sur une coupe méridienne du pneumatique, obtenue par découpage du pneumatique selon deux plans méridiens. A titre d'exemple, une coupe méridienne de pneumatique a une épaisseur selon la direction circonférentielle d'environ 60 mm au niveau de la bande de roulement. La mesure se fait en maintenant la distance entre les deux bourrelets identique à celle du pneumatique monté sur sa jante et faiblement gonflé.

Sur cette même coupe méridienne, on mesure l'épaisseur au centre de la bande roulement dans le plan équatorial comme étant la distance entre le point le plus radialement extérieur de la bande de roulement et le point le plus radialement extérieur de la couche la plus radialement extérieure de l'armature de sommet. Cette couche de renforts la plus radialement extérieure peut être soit la couche de protection soit en absence de couche de protection, la couche de travail la plus radialement extérieure. Le point le plus radialement extérieur de la couche la plus radialement extérieure de l'armature de sommet est obtenu en traçant une spline passant par les points les plus radialement extérieurs de chaque renfort de la dite couche. Cette spline coupe le plan équatorial par le point le plus radialement extérieur de la dite couche au plan équatorial.

Egalement sur cette même coupe méridienne, on mesure dans le plan équatorial, l'épaisseur au centre de l'armature de renforcement, comprenant les armatures de travail et de carcasse. L'épaisseur au centre de l'armature de renforcement est la distance entre le point le plus radialement extérieur de la couche de travail la plus radialement extérieure et le point le plus radialement intérieur de la couche de carcasse la plus radialement intérieure. Les points de mesure appartenant au plan équatorial sont obtenus par l'intersection dudit plan et de splines passant respectivement par les points les plus radialement extérieurs des éléments de renforcement de la couche de travail la plus radialement extérieure et par les points les plus radialement intérieurs des éléments de renforcement de la couche de carcasse la plus radialement intérieure.

De même sur cette coupe méridienne, on mesure dans le plan équatorial, l'épaisseur au centre de l'armature de travail. L'épaisseur au centre de l'armature de travail est la distance entre le point le plus radialement extérieur de la couche de travail la plus radialement extérieure et le point le plus radialement intérieur de la couche de travail la plus radialement intérieure. Les points de mesure appartenant au plan équatorial sont obtenus par l'intersection dudit plan et de splines passant respectivement par les points les plus radialement extérieurs des éléments de renforcement de la couche de travail la plus radialement extérieure et par les points les plus radialement intérieurs des éléments de renforcement de la couche de travail la plus radialement intérieure.

La ténacité d'un élément de renforcement est égale à sa force à la rupture divisée par son titre. Elle est exprimée cN/tex ou centinewton par tex. Le titre, ou masse linéique, est déterminé sur au moins trois échantillons de câblé, chacun correspondant à une longueur d'au moins 5 m par pesée de cette longueur ; le titre est donné en tex (poids en grammes de 1000 m de produit - rappel: 0, 111 tex égal à 1 denier).

Les éléments de renforcement des couches de travail des pneumatiques pour avion sont habituellement des polyamides aliphatiques d'une ténacité inférieure à 80 cN/tex. L'utilisation de matériaux de plus haute ténacité, c'est-à-dire au moins égale à 90 cN/tex, permet de diminuer le nombre de couches de travail pour une performance en endurance supérieure. Les gains de masse ainsi générés intéressent particulièrement l'industrie aéronautique pour les avions long courrier afin d'augmenter le nombre de passagers ou le tonnage de fret ou afin de diminuer la consommation de carburant. En revanche, pour un usage régional, la maîtrise des coûts de maintenance par l'augmentation du nombre d'atterrissages réalisés par pneumatique, c'est-à-dire l'amélioration de la performance durée de vie sur usure, est un paramètre crucial. L'utilisation d'éléments de renforcement d'une ténacité au moins égale à 90 cN/tex permet certes un gain de masse mais étonnement aussi par la modification des points de fonctionnement associés, une diminution des déformations, et donc une baisse significative de la température des points les plus chauds du sommet. Ceci représente un avantage supplémentaire en endurance dont il est possible de transformer une part en durée de vie sur usure, en augmentant significativement l'épaisseur au centre de la bande de roulement. Le potentiel d'endurance qu'il est possible de transformer ainsi en usure à l'atterrissage s'exprime par le rapport de l'épaisseur de l'armature de renforcement et de l'épaisseur de la bande de roulement et par le rapport de l'épaisseur de l'armature de travail et de l'épaisseur de la bande de roulement. De par calcul et mesures, au centre, dans le plan équatorial, l'épaisseur de la bande de roulement optimisant l'usure est au moins égale à 1,1 fois l'épaisseur de l'armature de renforcement, et est au moins égale à 1,5 fois l'épaisseur de l'armature de travail.

Pour ces mêmes pneumatiques, l'endurance du sommet impose que l'épaisseur au centre de la bande roulement est au plus égale à 2.4 fois l'épaisseur au centre de l'armature de renforcement constituée par l'armature de travail et l'armature de carcasse, et que l'épaisseur au centre de la bande roulement est au plus égale à 3.5 fois l'épaisseur au centre de l'armature de travail. En effet une bande de roulement trop épaisse implique une température d'usage plus élevée entrainant une baisse de la rigidité des gommes du sommet pouvant avoir comme conséquence leur fissuration lors de l'utilisation du pneumatique.

Il est particulièrement avantageux pour la baisse de la température au sommet et l'amélioration de l'endurance du pneumatique et d'autant plus que le nombre possible d'atterrissages a augmenté par l'augmentation de l'épaisseur de la bande de roulement que les éléments de renforcement de l'armature de carcasse soient constitués de matériaux d'une ténacité au moins égale à 90 cN/tex et que dans le plan équatorial, l'épaisseur au centre de la bande roulement soit au moins égale à 4.2 fois l'épaisseur au centre de l'armature de carcasse. Cela permet de convertir une partie du potentiel d'endurance supplémentaire apporté par l'usage d'éléments de renforcement de l'armature de carcasse d'une ténacité au moins égale à 90 cN/tex en amélioration de l'usure à l'atterrissage.

L'épaisseur au centre de l'armature de carcasse est mesurée sur la coupe méridienne, dans le plan équatorial. L'épaisseur au centre de l'armature de carcasse est la distance entre le point le plus radialement extérieur de la couche de carcasse la plus radialement extérieure et le point le plus radialement intérieur de la couche de carcasse la plus radialement intérieure. Les points de mesure appartenant au plan équatorial sont obtenus par l'intersection dudit plan et de splines passant respectivement par les points les plus radialement extérieurs des éléments de renforcement de la couche de carcasse la plus radialement extérieure et par les points les plus radialement intérieurs des éléments de renforcement de la couche de carcasse la plus radialement intérieure.

Il est important d'associer à une augmentation de l'usure à l'atterrissage exprimée par l'épaisseur au centre de la bande de roulement, une augmentation de l'usure au roulage en augmentant l'épaisseur de gomme à l'épaule, c'est-à-dire dans les parties les plus axialement extérieures de la bande de roulement afin d'éviter un déséquilibre entre le potentiel d'usure de roulage et le potentiel d'usure d'atterrissage, déséquilibre qui générerait une forme d'usure irrégulière mentionnée précédemment et notamment par l'état de la technique.

Pour évaluer les épaisseurs à l'épaule, on définit dans la coupe méridienne, une droite, dite droite de mesure des épaisseurs à l'épaule, passant par le centre du pneumatique, intersection du plan équatorial et de l'axe de rotation, et le point de la couche de travail la plus large, positionné à une distance axiale du plan équatorial de 0,9 fois la demi largeur axiale LT/2 de ladite couche. Quelle que soit sa fonction, travail ou protection, la couche de sommet la plus radialement extérieure à l'épaule est la couche, sécante à la droite de mesure, et la plus radialement extérieure. Par sécante à la droite de mesure, on entend que la dite couche a, dans la coupe méridienne, des renforts ou des parties de renforts situés de part et d'autre de la droite de mesure, c'est-à-dire que la dite couche a des renforts ou des parties de renforts axialement intérieurs à la droite de mesure et d'autres renforts ou parties de renforts axialement extérieurs à la droite de mesure. De même, la couche de travail la plus radialement extérieure à l'épaule est la couche de travail sécante à la droite de mesure et la plus radialement extérieure.

L'épaisseur de la bande roulement à l'épaule est la distance sur cette droite de mesure, entre le point le plus radialement extérieur de la bande de roulement sur la dite droite et le point de la droite de mesure le plus radialement extérieur de la couche de sommet la plus radialement extérieure à l'épaule. Cette couche de sommet la plus radialement extérieure à l'épaule peut être soit la couche de protection, soit la couche de travail la plus extérieure à l'épaule. Le point le plus radialement extérieur de la couche de sommet la plus radialement extérieure à l'épaule est obtenu en traçant une spline passant par les points les plus radialement extérieurs de chaque renfort de la dite couche ; cette spline coupe la dite droite de mesure par le dit point.

L'épaisseur de l'armature de renforcement à l'épaule, est également mesurée sur la coupe méridienne, sur la dite droite de mesure à l'épaule. L'épaisseur de l'armature de renforcement à l'épaule, est la distance sur cette droite, entre le point le plus radialement extérieur de la couche de travail la plus radialement extérieure à l'épaule et le point le plus radialement intérieur de la couche de carcasse la plus radialement intérieure. Les points de mesure appartenant à la droite de mesure sont obtenus par l'intersection de la dite droite et de splines passant respectivement par les points les plus radialement extérieurs des éléments de renforcement de la couche de travail la plus radialement extérieure à l'épaule et par les points les plus radialement intérieurs des éléments de renforcement de la couche de carcasse la plus radialement intérieure.

De même sur cette coupe méridienne, on mesure sur la droite de mesure à l'épaule, l'épaisseur de l'armature de carcasse à l'épaule. L'épaisseur de l'armature de carcasse à l'épaule est la distance entre le point le plus radialement extérieur de la couche de carcasse la plus radialement extérieure et le point le plus radialement intérieur de la couche de carcasse la plus radialement intérieure. Les points de mesure appartenant à la droite de mesure sont obtenus par l'intersection de cette droite et de splines passant respectivement par les points les plus radialement extérieurs des éléments de renforcement de la couche de carcasse la plus radialement extérieure et par les points les plus radialement intérieurs des éléments de renforcement de la couche de carcasse la plus radialement intérieure.

Pour ces mêmes pneumatiques, l'endurance du sommet impose que, dans le plan équatorial, l'épaisseur au centre de la bande roulement soit au plus égale à 8.6 fois l'épaisseur au centre de l'armature de carcasse. En effet une bande de roulement trop épaisse implique une température d'usage plus élevée entrainant une baisse de la rigidité des gommes du sommet pouvant avoir comme conséquence leur fissuration lors de l'utilisation du pneumatique.

Selon l'invention, l'épaisseur à l'épaule de la bande de roulement est au moins égale à 1,2 fois l'épaisseur à l'épaule de l'armature de renforcement. Cet équilibre des épaisseurs de la bande de roulement et de l'armature de renforcement permet l'amélioration de l'équilibre de l'usure à l'atterrissage et de l'usure de roulage.

Pour ces mêmes pneumatiques, et les mêmes raisons, l'endurance du sommet impose que, l'épaisseur à l'épaule de la bande de roulement est au plus égale à 3 fois l'épaisseur à l'épaule de l'armature de renforcement.

De même, il est également avantageux pour le bon dimensionnement en usure au roulage que, l'épaisseur à l'épaule de la bande de roulement soit au moins égale à 4.2 fois l'épaisseur à l'épaule de la couche de carcasse.

Pour ces mêmes pneumatiques, et les mêmes raisons, l'endurance du sommet impose que, l'épaisseur à l'épaule de la bande de roulement soit au plus égale à 8.6 fois l'épaisseur à l'épaule de la couche de carcasse.

Il est particulièrement avantageux pour la reprise des tensions dans l'armature de travail de disposer les éléments de renforcement des couches de cette armature, parallèles entre eux et inclinés, par rapport à la direction circonférentielle (XX'), d'un angle compris entre +20° et -20°.

Selon un mode de réalisation préféré, l'armature de carcasse comprend au moins une couche de carcasse comprenant des éléments de renforcement parallèles entre eux et faisant avec la direction circonférentielle, un angle compris entre 80° et 100°.

L'invention est d'autant plus avantageuse si les éléments de renforcement des couches de travail ont une ténacité au moins égale à 110 cN/tex.

Pour l'augmentation de la ténacité des couches de travail, il est particulièrement avantageux que les couches de travail comprennent des éléments de renforcement constitués de polyamides aromatiques ou d'une combinaison de polyamides aliphatiques et de polyamides aromatiques. En d'autres termes, le matériau constitutif des éléments de renforcement des couches de travail est l'aramide. Les éléments de renforcement peuvent être constitués de cet unique matériau ou combiner l'aramide et le nylon pour constituer des éléments de renforcement dits hybrides. Ces éléments de renforcement hybrides combinent avantageusement les propriétés d'extension du nylon et de l'aramide. Ce type de matériaux est utilisé avantageusement dans le domaine des pneumatiques pour avion en raison de leur faible densité et de leur forte résistance à la rupture résultant en une haute ténacité. Cette haute ténacité permet les gains en masse cruciaux dans le domaine aéronautique, et notamment la diminution du nombre de couches de travail nécessaires pour la reprise d'effort comparativement aux pneumatiques pour avion dont les armatures de travail et de carcasse sont en nylon.

Pour ces mêmes avantages, dans un mode de réalisation préférée de l'invention, les éléments de renforcement des couches de carcasse ont une ténacité au moins égale à 110 cN/tex.

Ainsi il est particulièrement avantageux que les couches de carcasse comprennent des éléments de renforcement constitués de polyamides aromatiques ou d'une combinaison de polyamides aliphatiques et de polyamides aromatiques.

Préférentiellement, une armature de protection, comprenant au moins une couche de protection constituée d'éléments de renforcement métalliques ou textiles, est disposée radialement à l'extérieur de l'armature de travail, pour préserver l'intégrité mécanique des couches de travail en cas de roulage sur un obstacle.

Les caractéristiques et autres avantages de l'invention seront mieux compris à l'aide des figures 1 à 4, les dites figures n'étant pas représentées à l'échelle mais de façon simplifiée, afin de faciliter la compréhension de l'invention.
- Figure 1 : sommet d'un pneumatique pour avion dans un plan méridien et les épaisseurs de la bande de roulement, de l'armature de travail, de l'armature de carcasse et de l'armature de renforcement
- Figure 2 : mesure de l'épaisseur au centre de la bande de roulement dans un plan méridien
- Figure 3 : mesure des épaisseurs au centre de l'armature de travail et de l'armature de carcasse dans un plan méridien
- Figure 4 : mesure des différentes épaisseurs à l'épaule dans un plan méridien

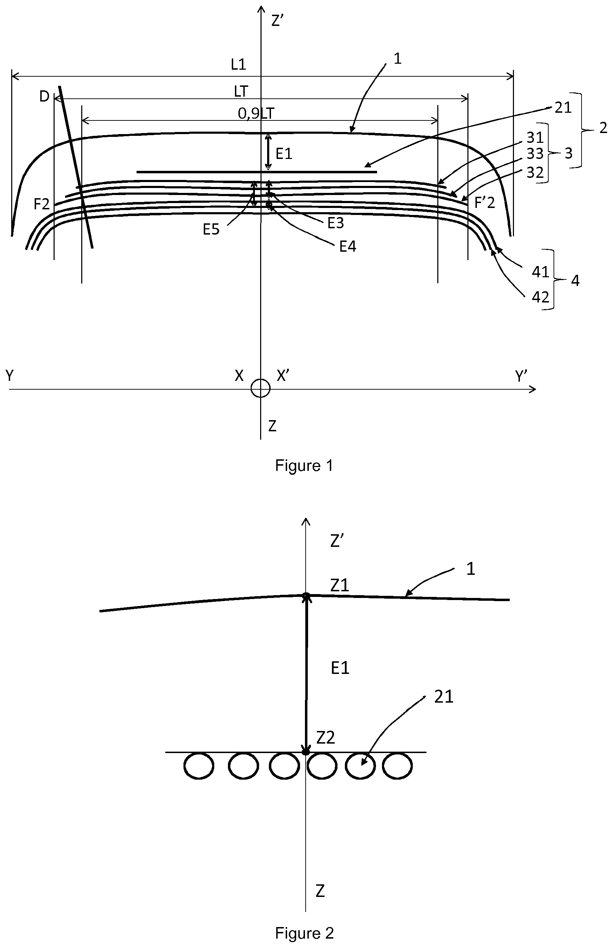

La figure 1 présente une coupe méridienne, c'est-à-dire dans un plan méridien, du sommet d'un pneumatique selon un mode de réalisation de l'invention comprenant une bande de roulement 1, une armature de sommet 2 radialement intérieure à la bande de roulement 1, comprenant un couche de protection 21 radialement intérieure à la bande de roulement 1 et une armature de travail 3 radialement intérieure à la couche de protection, une armature de carcasse radiale 4 radialement intérieure à l' armature de travail 3. L'armature de renforcement 5 est constituée de l'armature de carcasse 4 et de l'armature de travail 3. Les directions respectivement radiale, axiale et circonférentielle sont les directions ZZ', YY' et XX'. Le plan équatorial XZ est défini par les directions radiale ZZ' et circonférentielle XX'. La figure montre également la position des épaisseurs au centre de la bande de roulement E1, de l'armature de travail E3, de l'armature de carcasse E4 et de l'armature de renforcement E5.

L'armature de travail 3 est constituée de plusieurs couches de travail. La largeur axiale LT de la couche de travail la plus large 32 est la distance axiale entre ses extrémités axiales F2 et F'2, et est au moins égale aux deux tiers de la largeur axiale maximale L1 du pneumatique. La largeur axiale maximale L1 du pneumatique est mesurée au niveau des flancs, le pneumatique étant monté sur sa jante et faiblement gonflé, c'est-à-dire gonflé à une pression égale à 10% de la pression nominale recommandée.

La figure 2 montre le principe de la mesure de l'épaisseur au centre de la bande de roulement E1, entre le point Z1 défini comme appartenant au plan équatorial XZ et le plus radialement extérieur de la bande de roulement et le point Z2 du plan équatorial XZ déterminé par son intersection avec la spline passant par les points les plus radialement extérieurs des éléments de renforcement de la couche 21 la plus radialement extérieure de l'armature de sommet 2.

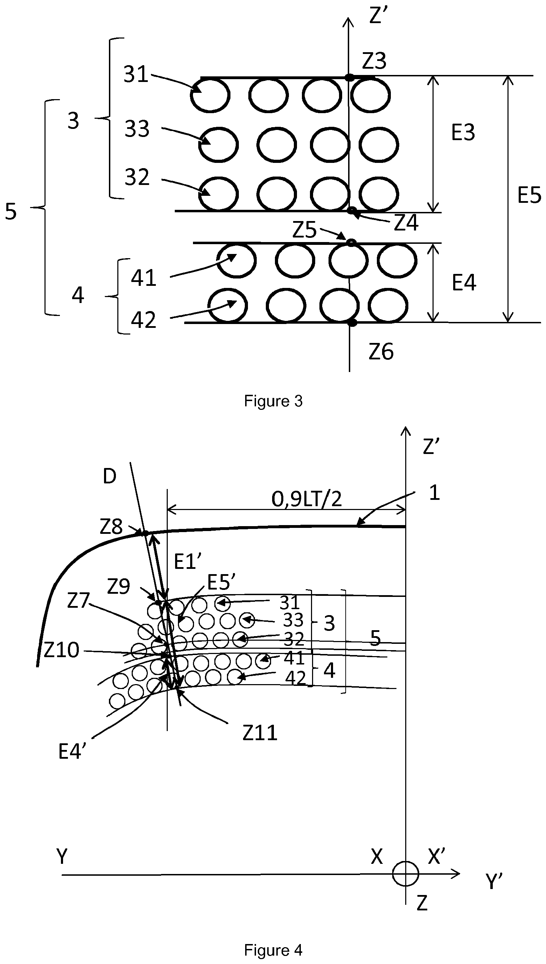

La figure 3 montre le principe de mesure de :
- l'épaisseur au centre E5 de l'armature de renforcement, entre les points Z3 et Z6,
- l'épaisseur au centre de l'armature de travail E3, entre les points Z3 et Z4,
- l'épaisseur au centre de l'armature de carcasse E4, entre les points Z5 et Z6.

Z3 est défini comme l'intersection du plan équatorial XZ et de la spline passant par les points les plus radialement extérieurs des éléments de renforcement de la couche 31 la plus radialement extérieure de l'armature de travail 3. Z4 est défini comme l'intersection du plan équatorial XZ et de la spline passant par les points les plus radialement intérieurs des éléments de renforcement de la couche 32 la plus radialement intérieure de l'armature de travail 3. Z5 est défini comme l'intersection du plan équatorial XZ et de la spline passant par les points les plus radialement extérieurs des éléments de renforcement de la couche 41 la plus radialement extérieure de l'armature de carcasse 4. Z6 est défini comme l'intersection du plan équatorial XZ et de la spline passant par les points les plus radialement intérieurs des éléments de renforcement de la couche 42 la plus radialement intérieure de l'armature de carcasse 4.

La figure 4 montre le principe de mesure de l'épaisseur de la bande de roulement à l'épaule E1' mesurée sur la droite D, droite de mesure à l'épaule, passant par le centre du pneumatique et passant par le point Z7 de la couche de travail la plus large et situé à une distance axiale de 90% de sa demi-largeur LT/2. On prendra pour rayon précis de Z7, le rayon du centre de l'élément de renforcement le plus proche. E1' est mesurée entre Z8 et Z9. Z8 est défini comme le point le plus radialement extérieur de la bande de roulement appartenant à D. Z9 est défini comme le point d'intersection de D et de la spline passant par les points les plus radialement extérieurs des éléments de renforcement de la couche de sommet la plus radialement extérieure à l'épaule, ici la couche de sommet la plus radialement extérieure à l'épaule est aussi la couche de travail la plus radialement extérieure à l'épaule 31.

La figure 4 montre également le principe de mesure de l'épaisseur de l'armature de renforcement à l'épaule E5' mesurée sur la droite D. E5' est mesurée entre le point d'intersection de D et de la spline passant par les points les plus radialement extérieurs des éléments de renforcement de la couche de travail 31 la plus radialement extérieure à l'épaule, ici confondu avec Z9, et Z11. Z11 est défini comme le point d'intersection de D et de la spline passant par les points les plus radialement intérieurs des éléments de renforcement de la couche carcasse 42 la plus radialement intérieure.

La figure 4 montre également le principe de mesure de l'épaisseur de l'armature de carcasse à l'épaule E4' mesurée sur la droite D. E4' est mesurée entre Z10 et Z11. Z10 est défini comme le point d'intersection de D et de la spline passant par les points les plus radialement extérieurs des éléments de renforcement de la couche carcasse 41 la plus radialement extérieure.

Les inventeurs ont réalisé l'invention selon un mode de réalisation pour un pneumatique pour avion de dimension 46x17R20, dont l'usage est caractérisé par une pression nominale égale à 15.3 bars, une charge statique nominale égale à 20473 daN et une vitesse de référence maximale de 360 km/h.

Le pneumatique de référence comme le pneumatique réalisé selon l'invention ont des sommets concaves au sens du brevet n° WO 2010000747

Le passage d'armatures de travail et de carcasse nylon à des armatures de travail et de carcasse hybrides permet de diminuer respectivement le nombre de couches de travail de 10 à 7 et le nombre de couches carcasse de 6 à 3.

L'invention a été réalisée avec une armature de travail constituée de 6 couches de travail, dont les éléments de renforcement sont de type hybride. La couche de travail radialement intérieure a une largeur axiale de 300 mm, soit 0.75 fois la largeur axiale maximale du pneumatique. La largeur de concavité de ladite couche de travail radialement intérieure est égale à 160 mm, et l'amplitude de concavité est égale à 6mm. L'armature de carcasse est constituée de 3 couches de carcasse, dont les éléments de renforcement sont hybrides.

Une armature de frettage est également utilisée. Elle est constituée d'une couche de frettage, dont les éléments de renforcement sont de type hybride. Pour les couches de travail et de frettage, les éléments de renforcement hybrides utilisés sont constitués de deux filés aramide de 330 tex chacun et d'un filé nylon de 188 tex. Le diamètre de l'élément de renforcement hybride obtenu est de 1.11 mm, son titre de 950 tex, sa torsion de 230 tr/m, son allongement sous 50 daN d'effort de 5.5%, sa force rupture de 110 daN soit une ténacité de 116 cN/tex.

Pour les couches de carcasse, les éléments de renforcement hybrides utilisés sont constitués de deux filés en aramide de 330 tex chacun et d'un filé nylon de 188 tex. Le diamètre de l'élément de renforcement hybride obtenu est de 1.1 mm, son titre de 980 tex, sa torsion de 270 tr/m, son allongement sous 50 daN d'effort de 5.5%, sa force rupture de 110 daN soit une ténacité de 112 cN/tex. D'autres renforcements hybrides pourraient également être utilisés. On peut notamment envisager d'utiliser des renforcements de torsion différente, voire des renforcements dont le titre ou le nombre de chaque filé est différent.

La diminution de la température maximale sur le plan équatorial permet en conservant la performance endurance du pneumatique d'augmenter l'épaisseur au centre E1 de la bande de roulement de 16 mm à 18 mm soit une augmentation de l'épaisseur E1 de 12.5%, et du volume de la gomme à user de 30%. Cette augmentation de l'épaisseur de la bande de roulement est associée par l'homme de l'art à une augmentation au moins équivalente du nombre d'atterrissages.

La diminution de la température maximale au niveau des extrémités axiales des couches de travail permet en conservant la performance endurance du pneumatique d'augmenter l'épaisseur à l'épaule E1' de la bande de roulement de 17.5 mm à 19.5 mm soit une augmentation de 11%. Cette augmentation de l'épaisseur de la bande de roulement est associée par l'homme de l'art à une augmentation au moins équivalente du nombre de kilomètres parcourus en roulage.

Dans le pneumatique de référence, dans le plan équatorial, l'épaisseur au centre E1 de la bande roulement entre le point radialement extérieur de la bande de roulement et la couche de sommet la plus radialement extérieure 21 est au plus égale à 0,9 fois l'épaisseur au centre E5 de l'armature de renforcement entre la couche de travail radialement la plus extérieure 31 et la couche de carcasse radialement la plus intérieure 42, est au plus égale à 1,2 fois l'épaisseur au centre E3 de l'armature de travail entre la couche de travail radialement la plus extérieure 31 et la couche de travail radialement la plus intérieure 32, et est au plus égale à 3 fois l'épaisseur au centre E4 de l'armature de carcasse E4 entre la couche de carcasse radialement la plus extérieure 41 et la couche de carcasse radialement la plus intérieure 42.

Dans le pneumatique selon l'invention, dans le plan équatorial, l'épaisseur de la bande roulement au centre E1 est égale à 1,24 fois l'épaisseur au centre E5 de l'armature de renforcement, est égale à 1,64 fois l'épaisseur au centre E3 de l'armature de travail, et est égale à 4,5 fois l'épaisseur au centre de l'armature de carcasse E4.

Dans le pneumatique de référence, à l'épaule, sur la droite de mesure D, l'épaisseur à l'épaule E1' de la bande roulement est au plus égale à 1 fois l'épaisseur à l'épaule E5' de l'armature de renforcement entre la couche de travail radialement la plus extérieure et la couche de carcasse radialement la plus intérieure, et est au plus égale à 3 fois l'épaisseur à l'épaule E4' de l'armature de carcasse entre la couche de carcasse radialement la plus extérieure et la couche de carcasse radialement la plus intérieure.

Dans le pneumatique selon l'invention, sur la droite D, l'épaisseur à l'épaule E1' de la bande roulement est égale à 1,26 fois l'épaisseur à l'épaule E5' de l'armature de renforcement et est égale à 4,88 fois l'épaisseur à l'épaule E4' de l'armature de carcasse.

L'estimation du gain en performance usure sur les atterrissages et sur le roulage est d'au moins 30% en corrélation avec l'augmentation du volume de gomme à user.

## Revendications

1. Pneumatique pour avion destiné à porter de lourdes charges et gonflé à des pressions supérieures à 15 bars. comprenant :
- une bande de roulement (1), ayant une épaisseur au centre (E1), mesurée dans le plan équatorial (XZ), passant par le milieu de la bande de roulement (1) et perpendiculaire à l'axe de rotation (YY') du pneumatique, entre le point (Z1) le plus radialement extérieur de la bande de roulement (1) et le point (Z2) le plus radialement extérieur d'une armature de sommet (2) radialement intérieure à la bande de roulement (1),
- l'armature de sommet (2), comprenant au moins une armature de travail (3),
- l'armature de travail (3) comprenant au moins une couche de travail (31, 32, 33), ayant une largeur axiale (LT), mesurée sur la couche de travail (32) ayant la plus grande largeur axiale, au moins égale aux 2/3 de la largeur axiale maximale du pneumatique (L1) et ayant une épaisseur au centre (E3) dans le plan équatorial (XZ), mesurée entre le point (Z3) le plus radialement extérieur de la couche de travail la plus radialement extérieure (31) et le point (Z4) le plus radialement intérieur de la couche de travail la plus radialement intérieure (32),
- les couches de travail (31, 32, 33) comprenant des éléments de renforcement textile, les éléments de renforcement des couches de travail (31 , 32, 33) ayant une ténacité au moins égale à 90 cN/tex,
- une armature de carcasse (4), radialement intérieure à l'armature de travail (3), comprenant au moins une couche de carcasse (41, 42) et ayant une épaisseur au centre (E4) dans le plan équatorial, mesurée entre le point (Z5) le plus radialement extérieur de la couche de carcasse la plus radialement extérieure (41) et le point (Z6) le plus radialement intérieur de la couche de carcasse la plus radialement intérieure (42),
- les couches de carcasse (41, 42) comprenant des éléments de renforcement textile,
- une armature de renforcement (5) constituée par l'armature de travail (3) et l'armature de carcasse (4) ayant une épaisseur au centre (E5) dans le plan équatorial, mesurée entre le point (Z3) le plus radialement extérieur de la couche de travail la plus radialement extérieure (31) et le point (Z6) le plus radialement intérieur de la couche de carcasse la plus radialement intérieure (42),
- une droite (D), passant par le centre (O) du pneumatique, intersection du plan équatorial (XZ) et de l'axe de rotation (YY'), et par le point (Z7) de la couche de travail la plus large (32), positionné à une distance axiale du plan équatorial (XZ) égale à 0.9 fois la demi largeur axiale (LT/2) de la dite couche, étant définie comme la droite de mesure des épaisseurs à l'épaule, la bande de roulement (1) ayant une épaisseur à l'épaule (E1'), mesurée entre le point (Z8) le plus radialement extérieur de la bande de roulement (1) positionné sur la droite de mesure (D) et le point (Z9) le plus radialement extérieur de la couche de sommet (31) la plus radialement extérieure positionné sur la droite de mesure (D), l'armature de renforcement (5) constituée par l'armature de travail (3) et l'armature de carcasse (4) ayant une épaisseur à l'épaule (E5') entre le point (Z9) le plus radialement extérieur de la couche de sommet (31) la plus radialement extérieure positionné sur la droite de mesure (D) et le point (Z11) le plus radialement intérieur de la couche de carcasse (42) la plus radialement intérieure, positionné sur la droite de mesure (D),
**caractérisé en ce que** l'épaisseur au centre (E1) de la bande roulement (1) est au moins égale à 1,1 fois l'épaisseur au centre (E5) de l'armature de renforcement (5) constituée par l'armature de travail (3) et l'armature de carcasse (4),
**en ce que** l'épaisseur au centre (E1) de la bande roulement (1) est au moins égale à 1,5 fois l'épaisseur au centre (E3) de l'armature de travail (3),
**en ce que** l'épaisseur à l'épaule (E1') de la bande de roulement (1) est au moins égale à 1,2 fois l'épaisseur à l'épaule (E5') de l'armature de renforcement (5) constituée par l'armature de travail (3) et l'armature de carcasse (4).

2. Pneumatique pour avion selon la revendication 1, **dans lequel** l'épaisseur au centre (E1) de la bande roulement (1) est au moins égale à 4.2 fois l'épaisseur au centre (E4) de l'armature de carcasse (4), **et dans lequel** les éléments de renforcement des couches de carcasse (41,42) ont une ténacité au moins égale à 90 cN/tex.

3. Pneumatique pour avion selon l'une quelconque des revendications 1 ou 2, l'armature de carcasse (4) ayant une épaisseur à l'épaule (E4'), mesuré entre le point (Z10) le plus radialement extérieur de la couche de carcasse (41) la plus radialement extérieure positionné sur la droite de mesure (D) et le point (Z11) le plus radialement intérieur de la couche carcasse (42) la plus radialement intérieure positionné sur la droite de mesure (D), **dans lequel** l'épaisseur à l'épaule (E1') de la bande de roulement (1) est au moins égale à 4.2 fois l'épaisseur à l'épaule (E4') de l'armature de carcasse (4).

4. Pneumatique selon l'une quelconque des revendications 1 à 3, **dans lequel** les couches de travail (31, 32, 33) comprennent des éléments de renforcement parallèles entre eux et formant, avec la direction circonférentielle (XX'), un angle compris entre +20° et -20°.

5. Pneumatique selon l'une quelconque des revendications 1 à 4, **dans lequel** les couches de carcasse (41, 42) comprennent des éléments de renforcement parallèles entre eux et formant, avec la direction circonférentielle (XX'), un angle compris entre 80° et 100°.

6. Pneumatique selon l'une quelconque des revendications 1 à 5, **dans lequel** les éléments de renforcement des couches de travail (31, 32, 33) ont une ténacité au moins égale à 110 cN/tex.

7. Pneumatique selon l'une quelconque des revendications 1 à 6, **dans lequel** les éléments de renforcement des couches de travail (31, 32, 33) sont constitués de polyamides aromatiques ou d'une combinaison de polyamides aliphatiques et de polyamides aromatiques.

8. Pneumatique selon l'une quelconque des revendications 1 à 7, **dans lequel** les éléments de renforcement des couches de carcasse (41,42) ont une ténacité au moins égale à 110 cN/tex.

9. Pneumatique selon l'une quelconque des revendications 1 à 8, **dans lequel** les éléments de renforcement des couches de carcasse (41,42) sont constitués de polyamides aromatiques ou d'une combinaison de polyamides aliphatiques et de polyamides aromatiques.

10. Pneumatique selon l'une quelconque des revendications 1 à 9, **dans lequel** l'armature de sommet (2) comprend au moins une armature de protection (21) radialement intérieure à la bande de roulement (1) et radialement extérieure à l'armature de travail (3) qui comprend au moins une couche de protection comprenant des éléments de renforcement métalliques ou textile.

## Patentansprüche

1. Flugzeugreifen, welcher dazu bestimmt ist, schwere Lasten zu tragen, und mit Drücken von über 15 bar aufgepumpt wird, umfassend:
- einen Laufstreifen (1) mit einer Dicke im Mittelpunkt (E1), gemessen in der durch die Mitte des Laufstreifens (1) verlaufenden und zur Drehachse (YY') des Reifens senkrechten Äquatorialebene (XZ) zwischen dem radial äußersten Punkt (Z1) des Laufstreifens (1) und dem radial äußersten Punkt (Z2) einer radial innerhalb des Laufstreifens (1) befindlichen Scheitelbewehrung (2),
- die Scheitelbewehrung (2), welche wenigstens eine Arbeitsbewehrung (3) umfasst,
- die Arbeitsbewehrung (3), welche wenigstens eine Arbeitslage (31, 32, 33) umfasst, mit einer axialen Breite (LT), gemessen an der Arbeitslage (32) mit der größten axialen Breite, die wenigstens gleich 2/3 der maximalen axialen Breite des Reifens (L1) ist, und mit einer Dicke im Mittelpunkt (E3) in der Äquatorialebene (XZ), gemessen zwischen dem radial äußersten Punkt (Z3) der radial äußersten Arbeitslage (31) und dem radial innersten Punkt (Z4) der radial innersten Arbeitslage (32),
- wobei die Arbeitslagen (31, 32, 33) textile Festigkeitsträger umfassen, wobei die Festigkeitsträger der Arbeitslagen (31, 32, 33) eine Feinheitsfestigkeit von wenigstens 90 cN/tex aufweisen,
- eine Karkassenbewehrung (4) radial innerhalb der Arbeitsbewehrung (3), welche wenigstens eine Karkassenlage (41, 42) umfasst und eine Dicke im Mittelpunkt (E4) in der Äquatorialebene aufweist, gemessen zwischen dem radial äußersten Punkt (Z5) der radial äußersten Karkassenlage (41) und dem radial innersten Punkt (Z6) der radial innersten Karkassenlage (42),
- wobei die Karkassenlagen (41, 42) textile Festigkeitsträger umfassen,
- wobei eine Verstärkungsbewehrung (5), die aus der Arbeitsbewehrung (3) und der Karkassenbewehrung (4) besteht, eine Dicke im Mittelpunkt (E5) in der Äquatorialebene aufweist, gemessen zwischen dem radial äußersten Punkt (Z3) der radial äußersten Arbeitslage (31) und dem radial innersten Punkt (Z6) der radial innersten Karkassenlage (42),
- wobei, wenn eine Gerade (D), die durch den Mittelpunkt (O) des Reifens, welcher der Schnittpunkt der Äquatorialebene (XZ) und der Drehachse (YY') ist, und durch den Punkt (Z7) der breitesten Arbeitslage (32) verläuft, der in einem axialen Abstand von der Äquatorialebene (XZ) positioniert ist, welcher gleich dem 0,9-fachen der halben axialen Breite (LT/2) dieser Lage ist, als die Messgerade der Dicken an der Schulter definiert ist, der Laufstreifen (1) eine Dicke an der Schulter (E1') aufweist, gemessen zwischen dem auf der Messgeraden (D) liegenden radial äußersten Punkt (Z8) des Laufstreifens (1) und dem auf der Messgeraden (D) liegenden radial äußersten Punkt (Z9) der radial äußersten Scheitellage (31), und die Verstärkungsbewehrung (5), die aus der Arbeitsbewehrung (3) und der Karkassenbewehrung (4) besteht, eine Dicke an der Schulter (E5') zwischen dem auf der Messgeraden (D) liegenden radial äußersten Punkt (Z9) der radial äußersten Scheitellage (31) und dem auf der Messgeraden (D) liegenden radial innersten Punkt (Z11) der radial innersten Karkassenlage (42) aufweist,
**dadurch gekennzeichnet, dass** die Dicke im Mittelpunkt (E1) des Laufstreifens (1) wenigstens gleich dem 1,1-fachen der Dicke im Mittelpunkt (E5) der aus der Arbeitsbewehrung (3) und der Karkassenbewehrung (4) bestehenden Verstärkungsbewehrung (5) ist,
dadurch, dass die Dicke im Mittelpunkt (E1) des Laufstreifens (1) wenigstens gleich dem 1,5-fachen der Dicke im Mittelpunkt (E3) der Arbeitsbewehrung (3) ist, dadurch, dass die Dicke an der Schulter (E1') des Laufstreifens (1) wenigstens gleich dem 1,2-fachen der Dicke an der Schulter (E5') der aus der Arbeitsbewehrung (3) und der Karkassenbewehrung (4) bestehenden Verstärkungsbewehrung (5) ist.

2. Flugzeugreifen nach Anspruch 1, wobei die Dicke im Mittelpunkt (E1) des Laufstreifens (1) wenigstens gleich dem 4,2-fachen der Dicke im Mittelpunkt (E4) der Karkassenbewehrung (4) ist, und wobei die Festigkeitsträger der Karkassenlagen (41, 42) eine Feinheitsfestigkeit von wenigstens 90 cN/tex aufweisen.

3. Flugzeugreifen nach einem der Ansprüche 1 oder 2, wobei die Karkassenbewehrung (4) eine Dicke an der Schulter (E4') aufweist, gemessen zwischen dem auf der Messgeraden (D) liegenden radial äußersten Punkt (Z10) der radial äußersten Karkassenlage (41) und dem auf der Messgeraden (D) liegenden radial innersten Punkt (Z11) der radial innersten Karkassenlage (42), wobei die Dicke an der Schulter (E1') des Laufstreifens (1) wenigstens gleich dem 4,2-fachen der Dicke an der Schulter (E4') der Karkassenbewehrung (4) ist.

4. Reifen nach einem der Ansprüche 1 bis 3, wobei die Arbeitslagen (31, 32, 33) Festigkeitsträger umfassen, die zueinander parallel sind und mit der Umfangsrichtung (XX') einen Winkel zwischen +20° und - 20° bilden.

5. Reifen nach einem der Ansprüche 1 bis 4, wobei die Karkassenlagen (41, 42) Festigkeitsträger umfassen, die zueinander parallel sind und mit der Umfangsrichtung (XX') einen Winkel zwischen 80° und 100° bilden.

6. Reifen nach einem der Ansprüche 1 bis 5, wobei die Festigkeitsträger der Arbeitslagen (31, 32, 33) eine Feinheitsfestigkeit von wenigstens 110 cN/tex aufweisen.

7. Reifen nach einem der Ansprüche 1 bis 6, wobei die Festigkeitsträger der Arbeitslagen (31, 32, 33) aus aromatischen Polyamiden oder einer Kombination von aliphatischen Polyamiden und aromatischen Polyamiden bestehen.

8. Reifen nach einem der Ansprüche 1 bis 7, wobei die Festigkeitsträger der Karkassenlagen (41, 42) eine Feinheitsfestigkeit von wenigstens 110 cN/tex aufweisen.

9. Reifen nach einem der Ansprüche 1 bis 8, wobei die Festigkeitsträger der Karkassenlagen (41, 42) aus aromatischen Polyamiden oder einer Kombination von aliphatischen Polyamiden und aromatischen Polyamiden bestehen.

10. Reifen nach einem der Ansprüche 1 bis 9, wobei die Scheitelbewehrung (2) wenigstens eine Schutzbewehrung (21) umfasst, die radial innerhalb des Laufstreifens (1) und radial außerhalb der Arbeitsbewehrung (3) angeordnet ist und wenigstens eine Schutzschicht umfasst, die metallische oder textile Festigkeitsträger umfasst.

## Claims

1. Tyre for an aeroplane, said tyre being intended to bear heavy loads and being inflated to pressures greater than 15 bar, and comprising:
- a tread (1) having a centre thickness (E1) that is measured in the equatorial plane (XZ), passing through the middle of the tread (1) and perpendicular to the axis of rotation (YY') of the tyre, between the radially outermost point (Z1) of the tread (1) and the radially outermost point (Z2) of a crown reinforcement (2) radially on the inside of the tread (1),
- the crown reinforcement (2) comprising at least one working reinforcement (3),
- the working reinforcement (3) comprising at least one working layer (31, 32, 33) that has an axial width (LT), measured over the working layer (32) having the greatest axial width, at least equal to 2/3 of the maximum axial width of the tyre (L1), and having a centre thickness (E3) in the equatorial plane (XZ), said thickness (E3) being measured between the radially outermost point (Z3) of the radially outermost working layer (31) and the radially innermost point (Z4) of the radially innermost working layer (32),
- the working layers (31, 32, 33) comprising textile reinforcing elements, the reinforcing elements of the working layers (31, 32, 33) having a tenacity at least equal to 90 cN/tex,
- a carcass reinforcement (4), radially on the inside of the working reinforcement (3), comprising at least one carcass layer (41, 42) and having a centre thickness (E4) in the equatorial plane, said thickness (E4) being measured between the radially outermost point (Z5) of the radially outermost carcass layer (41) and the radially innermost point (Z6) of the radially innermost carcass layer (42),
- the carcass layers (41, 42) comprising textile reinforcing elements,
- a reinforcement (5) that is formed by the working reinforcement (3) and the carcass reinforcement (4) and has a centre thickness (E5) in the equatorial plane, said thickness (E5) being measured between the radially outermost point (Z3) of the radially outermost working layer (31) and the radially innermost point (Z6) of the radially innermost carcass layer (42),
- a straight line (D) that passes through the centre (O) of the tyre, at the intersection of the equatorial plane (XZ) and the axis of rotation (YY'), and through the point (Z7) of the widest working layer (32), said point (Z7) being positioned at an axial distance from the equatorial plane (XZ) equal to 0.9 times the axial half-width (LT/2) of said layer, being defined as the measuring line for the shoulder thicknesses, the tread (1) having a shoulder thickness (E1') measured between the radially outermost point (Z8), positioned on the measuring line (D), of the tread (1) and the radially outermost point (Z9), positioned on the measuring line (D), of the radially outermost crown layer (31), the reinforcement (5) formed by the working reinforcement (3) and the carcass reinforcement (4) having a shoulder thickness (E5') between the radially outermost point (Z9), positioned on the measuring line (D), of the radially outermost crown layer (31), and the radially innermost point (Z11), positioned on the measuring line (D), of the radially innermost carcass layer (42),
**characterized in that** the centre thickness (E1) of the tread (1) is at least equal to 1.1 times the centre thickness (E5) of the reinforcement (5) formed by the working reinforcement (3) and the carcass reinforcement (4),
**in that** the centre thickness (E1) of the tread (1) is at least equal to 1.5 times the centre thickness (E3) of the working reinforcement (3),
**in that** the shoulder thickness (E1') of the tread (1) is at least equal to 1.2 times the shoulder thickness (E5') of the reinforcement (5) formed by the working reinforcement (3) and the carcass reinforcement (4).

2. Aeroplane tyre according to Claim 1, wherein the centre thickness (E1) of the tread (1) is at least equal to 4.2 times the centre thickness (E4) of the carcass reinforcement (4), and wherein the reinforcing elements of the carcass layers (41, 42) have a tenacity at least equal to 90 cN/tex.

3. Aeroplane tyre according to either one of Claims 1 and 2, the carcass reinforcement (4) having a shoulder thickness (E4'), measured between the radially outermost point (Z10), positioned on the measuring line (D), of the radially outermost carcass layer (41) and the radially innermost point (Z11), positioned on the measuring line (D), of the radially innermost carcass layer (42), wherein the shoulder thickness (E1') of the tread (1) is at least equal to 4.2 times the shoulder thickness (E4') of the carcass reinforcement (4).

4. Tyre according to any one of Claims 1 to 3, wherein the working layers (31, 32, 33) comprise mutually parallel reinforcing elements that form an angle of between +20° and -20° with the circumferential direction (XX').

5. Tyre according to any one of Claims 1 to 4, wherein the carcass layers (41, 42) comprise mutually parallel reinforcing elements that form an angle of between 80° and 100° with the circumferential direction (XX').

6. Tyre according to any one of Claims 1 to 5, wherein the reinforcing elements of the working layers (31, 32, 33) have a tenacity at least equal to 110 cN/tex.

7. Tyre according to any one of Claims 1 to 6, wherein the reinforcing elements of the working layers (31, 32, 33) consist of aromatic polyamides or a combination of aliphatic polyamides and aromatic polyamides.

8. Tyre according to any one of Claims 1 to 7, wherein the reinforcing elements of the carcass layers (41, 42) have a tenacity at least equal to 110 cN/tex.

9. Tyre according to any one of Claims 1 to 8, wherein the reinforcing elements of the carcass layers (41, 42) consist of aromatic polyamides or a combination of aliphatic polyamides and aromatic polyamides.

10. Tyre according to any one of Claims 1 to 9, wherein the crown reinforcement (2) comprises at least one protective reinforcement (21) radially on the inside of the tread (1) and radially on the outside of the working reinforcement (3) which comprises at least one protective layer that comprises metal or textile reinforcing elements.
